Europäisches Patentamt

European Patent Office

Office européen des brevets

(11) Veröffentlichungsnummer: **0 405 100 A1**

## (12) EUROPÄISCHE PATENTANMELDUNG

(21) Anmeldenummer: 90108767.6

(51) Int. Cl.5: **B60B 23/12**

(22) Anmeldetag: 10.05.90

(30) Priorität: 28.06.89 DE 3921121

(43) Veröffentlichungstag der Anmeldung:
02.01.91 Patentblatt 91/01

(84) Benannte Vertragsstaaten:
AT DE DK ES FR GB IT

(71) Anmelder: LEMMERZ-WERKE KGaA
Ladestrasse
D-5330 Königswinter 1(DE)

(72) Erfinder: Aderer, Peter
Siebengebirgsstrasse 94
D-5330 Königswinter 41(DE)

(74) Vertreter: Vollbach, Hans, Dipl.-Ing. et al
Patentanwälte Dipl.-Ing. Buschhoff Dipl.Ing
Hennicke Dipl.-Ing. Vollbach
Kaiser-Wilhelm-Ring 24
D-5000 Köln 1(DE)

(54) Spurverstellrad.

(57) Bei dem erfindungsgemäßen Spurverstellrad erfolgt die Schraubenverbindung der versetzbaren Radschüssel (2) mit der Felge (1) mit Hilfe U-förmiger Halteböckchen (3), die mittels in Felgenumfangsrichtung verlaufender Schweißnähte (16) am Felgenboden (6) befestigt sind. Am Felgenboden (6) sind an den Anschlußstellen der Halteböckchen (3) nockenartige Einpressungen (11) angeordnet, die mit Formschluß in die Halteböckchen einfassen und gegen deren Flanken sich die Halteböckchen mit ihren Schenkeln (12) seitlich abstützen. Die Formschlußverbindung nimmt die axialen Radkräfte auf, so daß die Schweißnähte (16) von diesen Kräften entlastet sind.

FIG. 2

## SPURVERSTELLRAD

Die Erfindung betrifft ein Spurverstellrad mit einer an Halteböckchen der Felge lösbar und versetzbar angeordneten Radschüssel, wobei die über den Innenumfang der Felge verteilt angeordneten, in der Grundform U-förmigen Halteböckchen an ihren Schenkeln, die mit fluchtenden Bolzenlöchern für der Radschüsselbefestigung dienende axiale Schrauben versehen sind, mittels in Felgenumfangsrichtung verlaufender Schweißnähte am Felgenboden befestigt sind.

Spurverstellräder werden zur Spurweiteneinstellung vor allem bei Ackerschleppern und sonstigen Fahrzeugen für den land-und forstwirtschaftlichen Einsatz verwendet. Die gebräuchlichen Spurverstellräder weisen Radschüsseln auf, die in unterschiedlichen axialen Einstellpositionen an der Radfelge anschließbar sind. Die Felgen sind dabei mit über ihren Innenumfang verteilt angeordneten angeschweißten Halteböckchen versehen, an denen die mehrlappige Radschüssel angeschlossen wird. Dabei ergeben sich bei den bekannten Spurverstellrädern aus der jeweiligen Stellung der Felge zur Radschüssel bzw. der Radschüssel zum Radnabenflansch verschiedene Spurverstellmöglichkeiten, und zwar im allgemeinen acht Spureinstellungen.

In der Vergangenheit sind zahlreiche Gestaltungsformen für die der Schraubenbefestigung der Radschüssel dienenden Halteböckchen vorgeschlagen und verwendet werden, unter anderem U-förmige, winkel- oder S-förmige Halteböckchen oder auch sogenannte Omegaböckchen. Die bekannten Halteböckchen werden mittels axialer Schweißnähte oder mittels in Felgenumfangsrichtung verlaufender Schweißnähte, gelegentlich auch mittels einer Kombination beider Schweißnähte mit der Felge verbunden (DE-PS 837 649, GB-PS 666 112, DE-PS 22 47 007, DE-GM 76 05 257, EP-PS 0 025 677). In der Vergangenheit hat man auch schon vorgeschlagen, für die Verbindung von Felge und Radschüssel andere Verbindungsarten, z.B. Niet- oder Klemmverbindungen, vorzusehen. Bekannt ist z.B. ein Spurverstellrad, bei dem die Felge mittels axialer Schrauben, Exzenterbolzen und Klemmstükke an einer umlaufenden radialen Sicke des Felgenbodens am Radkörper festgelegt wird. Zur drehschlüssigen Verbindung der Felge mit dem Radkörper werden dabei Anschlagnocken am Felgenboden angeordnet (US-PS 2 254 361).

Es ist weiterhin bekannt, für Spurverstellräder und andere Räder vierlappige Radschüsseln zu verwenden, die sich materialsparend und damit kostengünstig aus quadratischen Blechzuschnitten fertigen lassen (FR-PS 871 754). Bei Spurverstellrädern erfolgt hier die Schraubenbefestigung der Radschüssel an den vier Schüsselecken bzw. -lappen entweder jeweils mittels einer einzigen Befestigungsschraube oder aber mittels eines Schraubenpaares, wobei an den Befestigungsstellen entweder Einzel- oder auch Doppelhalteböckchen vorgesehen werden (EP-PS 0 025 677).

Unabhängig von den zahlreichen bekannten Ausgestaltungsformen der Halteböckchen sind diese in der Vergangenheit stets so an den Felgen angeschweißt worden, daß die im Einsatz auf das Rad wirkenden axialen und radialen Kräfte, ebenso wie das Antriebsdrehmoment, über die Verbindungen bzw. die Schweißnähte übertragen werden. Die im Einsatz auftretenden hohen Radbelastungen, die häufig als Stoßkräfte wirken, führen zu beträchtlichen Beanspruchungen und nicht selten auch zu Verformungen der Halteböckchen und außerdem zu ungünstigen Beanspruchungen der Schweißverbindungen, so daß es unter bestimmten Einsatzbedingungen der Schlepper nicht selten zu einem Bruch der Schweißnähte und/oder der Halteböckchen kommt. Ein Bruch der Schweißverbindungen läßt sich durch eine mit erhöhtem Fertigungsaufwand verbundene Verstärkung der Halteböckchen nicht zuverlässig ausschließen.

Es ist daher Aufgabe der Erfindung, ein wirtschaftlich herzustellendes Spurverstellrad mit verbesserten Festigkeitseigenschaften der Verbindungen zwischen Halteböckchen und Felge und damit insgesamt der Radschüsselbefestigung unter Entlastung der Schweißverbindungen zu schaffen.

Diese Aufgabe wird erfindungsgemäß dadurch gelöst, daß der Felgenboden am Sitz der Halteböckchen nockenartige Einpressungen aufweist, die in die Halteböckchen mit Formschluß einfassen und gegen deren Flanken sich die Halteböckchen mit ihren Schenkeln seitlich abstützen.

Bei dem erfindungsgemäßen Spurverstellrad erfolgt demgemäß eine formschlüssige Abstützung der Halteböckchen auf der Nabenseite der Felge an den nockenartigen Einpressungen des Felgenbodens, so daß die in Achsrichtung des Rades wirkenden Kräfte, also die Axialkräfte durch den Formschluß zwischen den Halteböckchen und den Einpressungen aufgenommen und die Schenkel der Halteböckchen durch die Einpressungen in ihrem Abstand zueinander fixiert werden. Gleichzeitig erfolgt durch die aufgebrachten Schraubenvorspannkräfte der Verbindung Radschüssel - Halteböckchen - Felge ein Kraftschluß zwischen den Halteböckchen und den Einpressungen der Felge, der die in radialer und tangentialer Richtung wirkenden Kräfte aus Radbelastung, Antriebs- und Bremsmomenten und Stoßkräften aufnimmt. Durch den Form- und Kraftschluß werden die Schweißverbindungen von Kräften weitgehend entlastet, die sonst ausschließlich über die Schweißnähte und die Fußradien der Halteböckchen geleitet werden. Damit ergibt sich eine stark verminderte und insgesamt eine wesentlich günstigere Beanspruchung der Halteböckchen und der Schweißnähte, so daß Halteböckchen- und Schweißnahtbrüche wirksam vermieden werden können. Auch werden aufgrund der Seitenabstützung der Halteböckchen an den nockenartigen Einpressungen übermäßige Verformungen der Halteböckchen vermieden.

Die nockenartigen Einpressungen am Felgenboden lassen sich bei der Fertigung der Stahlfelge ohne übermäßigen Mehraufwand durch Kaltverformung mittels einfacher Preßwerkzeuge herstellen. Dabei ist es ohne weiteres möglich, die örtlichen Einpressungen in ihrer Form und in ihren Abmessungen so auszuführen, daß sich hier keine übermäßigen, die Festigkeit des Rades in Frage stellenden Dickenverminderungen des Felgenbodens ergeben. Die bei der Fertigung der Felge angeformten nockenartigen Einpressungen haben beim nachfolgenden Ansetzen und Anschweißen der Halteböckchen zugleich die Funktion von die Halteböckchen gegenüber der Felge ausrichtenden und zentrierenden Zentrierorganen, wodurch der positionsgerechte Anschluß der Halteböckchen an der Felge erleichtert wird und damit verbesserte Rundlauf- und Planlauf-Werte erreichbar sind.

In vorgenannter Hinsicht vorteilhaft ist es, wenn die nockenartigen Einpressungen zur Durchmesserebene der Felge symmetrisch mit zur Radachse konvex gewölbtem Boden und zum Felgenboden divergierenden, über Rundungen in den Felgenboden übergehenden Flanken ausgeführt werden. Nach einem weiteren wesentlichen Erfindungsmerkmal sind die nockenartigen Ein pressungen als örtliche Ausdrückungen einer umlaufenden Sikke oder Rille des Felgenbodens ausgeführt. Die am Felgenboden angeformte rund-umlaufende Sicke bewirkt zugleich eine Aussteifung des Felgenbodens insbesondere auch in den Zwischenbereichen zwischen den Halteböckchen, so daß insofern zusätzliche festigkeitsmäßige Vorteile erzielt werden, dies vor allem dann, wenn als Radschüssel eine kostensparend aus einem Vierkantblech hergestellte vierlappige Schüssel Verwendung findet. Die Anordnung der umlaufenden Sicke begünstigt auch die Ausformung der nockenartigen Einpressungen, da hierzu lediglich die Sicke örtlich zu den nockenartigen Einpressungen ausgeformt zu werden braucht.

Die vorgenannte Sicke wird zweckmäßig im Querschnitt etwa flach-V-förmig ausgeformt. Die Breite der nockenartigen Einpressungen kann etwa gleich der Breite der Sicke sein. Dabei ist es auch möglich, die Länge der nockenartigen Einpressungen, in Felgenumfangsrichtung gesehen, kleiner zu bemessen als die Länge der Halteböckchen in Felgenumfangsrichtung. Die vorzugsweise im Bereich der Bolzenlöcher der Halteböckchen befindlichen nockenartigen Einpressungen laufen von den Bolzenlöchern der Haltebeckchen nach beiden Seiten flach kurvenförmig in den Felgenboden aus.

Für die Halteböckchen werden, wie erwähnt, in der Grundform U-förmig ausgebildete Böckchen verwendet, deren beide etwa parallele U-Schenkel in ihrem gegenseitigen Abstandsmaß der Breite der nockenartigen Einpressungen angepaßt sind, um die genannte formschlüssige Flächenabstützung an den Flanken der nockenartigen Einpressungen zu erreichen. Die Schenkel der Halteböckchen werden zweckmäßig mit nach außen gerichteten, sich gegen den Felgenboden legenden Flanken versehen, an denen die Halteböckchen beiderseits der nockenartigen Einpressungen mit dem Felgenboden verschweißt wer den. Dadurch, daß die Halteböckchen an ihren axial nach außen gerichteten Flanschen über die in Felgenumfangsrich tung verlaufenden Schweißnähte mit der Felge verbunden werden, ergibt sich auch eine von der Beanspruchung und von der Durchführung der Schweißarbeit her günstige Lage der Schweißnähte.

Im Hinblick auf eine wirtschaftliche Fertigung des erfindungsgemäßen Spurverstellrades vorteilhaft ist es ferner, wenn die Halteböckchens wie an sich bekannt, als Doppelböckchen für den Anschluß einer vierlappigen Radschüssel ausgebildet werden, die sich materialsparend und daher kostengünstig aus einem einfachen quadratischen Blechzuschnitt herstellen läßt. Die als Doppelböckchen ausgebildeten Halteböckchen weisen hierbei jeweils zwei Bolzenlochpaare auf. Die Anordnung wird bei Verwendung von Doppelböckchen vorteilhafterweise so getroffen, daß die Felge am Sitz der Doppelböckchen jeweils zwei nockenartige Einpressungen etwa im Abstand der beiden Bolzenlochpaare aufweist.

Insbesondere bei Verwendung des erfindungsgemäßen Spurverstellrades als Vorderrad bei Schleppern u.dgl. können die Halteböckchen, gemessen über ihre Schenkel, eine Breite aufweisen, die erheblich kleiner ist als ihre Höhe. Die schmalen Halteböckchen benötigen zu ihrer Formschlußverbindung nockenartige Einpressungen von entsprechend kleinen Abmessungen.

Die in der Grundform U-förmigen Halteböckchen zeichnen sich durch hohe Bauteilfestigkeit aus. In dieser Hinsicht vorteilhaft ist es, wenn der Profilsteg der U-förmigen Halteböckchen in den beiden Endbereichen des Halteböckchens eine zur Profilaußenseite gerichtete Auswölbung mit einem inneren Krümmungsradius erhält, der größer ist als der Krümmungsradius zwischen Profilsteg und Profilschenkeln im Zwischenabschnitt zwischen den beiden Endbereichen des Halteböckchens. In den beiden Endbereichen sind die beiden Profilschenkel des Halteböckchens im gekrümmten Übergangsbereich zu dem gewölbten Profilsteg gegenüber der Lage der Profilschenkel im Zwischenabschnitt in den Profilinnenraum eingezogen, wobei der Krümmungsradius zwischen dem Profilsteg und den Profilschenkeln vom Übergang zu dem Zwischenabschnitt in Richtung auf das Ende des Halteböckchens hin stetig ansteigt. Die Löcher für die der Verbindung mit der Radschüssel dienenden Schraubenbolzen werden hierbei zweckmäßig außerhalb der ausgeformten Endbereiche an den Profilschenkeln der Halteböckchen angeordnet. Mit diesen Gestaltungsmerkmalen ergibt sich eine besonders große Bauteilfestigkeit der Halteböckchen. Insbesondere werden schädliche Spannungskonzentrationen in den besonders gefährdeten Endbereichen des Halteböckchens vermieden. Die Vergrößerung der Krümmungsradien an den Übergängen zwischen den Profilschenkeln und dem Profilsteg des Halteböckchens in den Endbereichen desselben führt zu festigkeitsmäßig günstigen Anlageverhältnissen zwischen Halteböckchen und Radschüssellappen. Vor allem läßt sich erreichen, daß in den Endbereichen des Halteböckchens keine Anlage mit dem Radschüssellappen gegeben ist, diese sich vielmehr auf den inneren Längenabschnitt des Halteböckchens beschränkt, wo eine großflächige Anlage des Radschüssellappens am Profilschenkel des Halteböckchens gegeben ist.

Die Erfindung wird nachfolgend im Zusammenhang mit dem in der Zeichnung gezeigten bevorzugten Ausführungsbeispiel eines Spurverstellrades näher erläutert. In der Zeichnung zeigen:

Fig. 1 ein erfindungsgemäßes Spurverstellrad in einer Ansicht;

Fig. 2 das Spurverstellrad nach Fig. 1 in einem radialen Teilschnitt durch die Felge, ein Halteböckchen und die Radschüssel;

Fig. 3 und 4 jeweils einen Teilschnitt durch einen Bereich des Felgenbodens mit der hier angeformten Sicke (Fig. 3) bzw. der angeformten nockenartigen Einpressung (Fig. 4);

Fig. 5 in einem Teilschnitt durch die Felge das am Felgenboden angeschweißte, als Doppelböckchen ausgebildete Halteböckchen im Längsschnitt;

Fig. 6 ein Halteböckchen in größerem Maßstab in Seitenansicht, welches bei dem erfindungsgemäßen Spurverstellrad mit Vorteil Verwendung findet;

Fig. 7 das Halteböckchen in einem Schnitt nach Linie VII-VII der Fig. 6 (links der vertikalen Mittelebene) und in einer Stirnansicht (rechts der vertikalen Mittelebene).

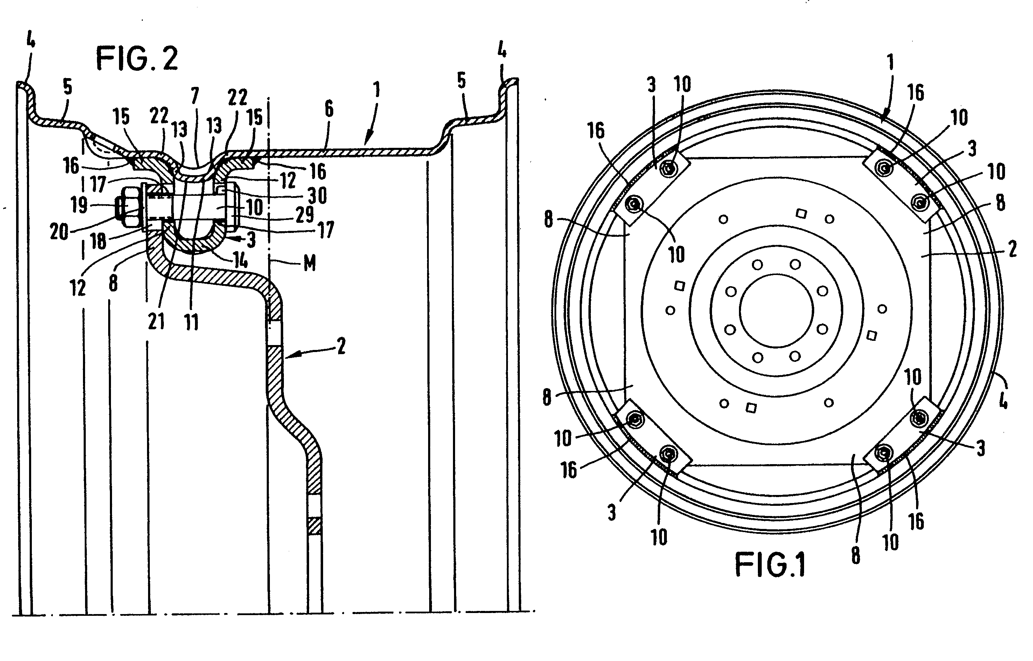

Das als Scheibenrad ausgebildete Spurverstellrad nach den Fig. 1 bis 5 besteht in seinen Hauptteilen aus der Felge 1, welche den (nicht dargestellten) Reifen trägt, der Radschüssel 2 als Verbindungsstück zwischen Felge und Radnabe und Halteböckchen 3, die der lösbaren und umsetzbaren Verbindung der Radschüssel 2 mit der Felge 1 dienen.

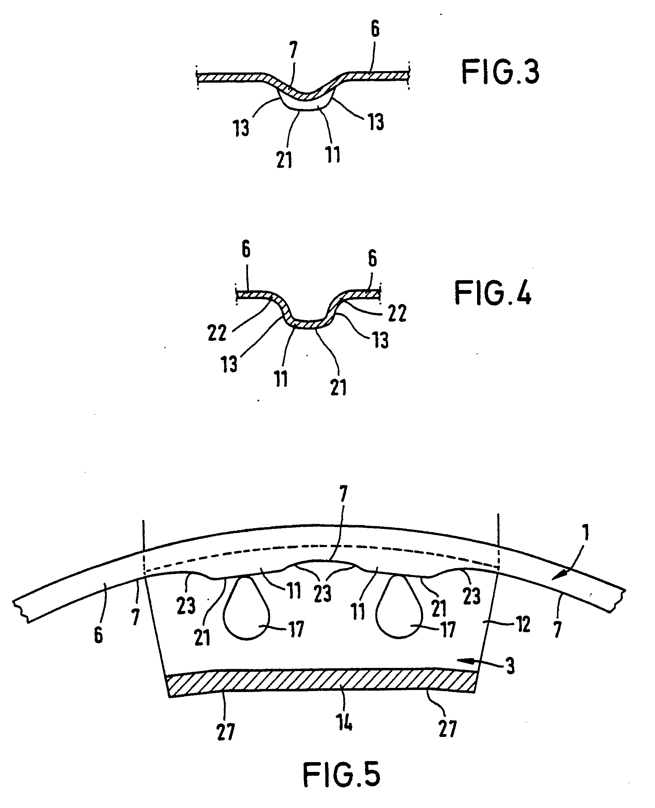

Wie vor allem Fig. 2 zeigt, ist die einteilige Felge 1 mit ihren Felgenhörnern 4, den Felgenschultern 5 und dem Felgenboden 6 als Tiefbettfelge ausgebildet, in deren Felgenboden 6 eine rund umlaufende Sicke 7 eingearbeitet ist, die im Querschnitt flach-V-förmig ausgeformt ist (Fig. 3). Die zur Radialebene symmetrisch ausgeformte Sicke 7 ist zur radialen Mittelebene M der Felge um das Spurmaß versetzt am Felgenboden 6 angeordnet.

Wie Fig. 1 zeigt, ist die Radschüssel 2 als vierlappige Schüssel gefertigt, deren vier Lappen 8 an den Ecken der im Umriß etwa quadratischen Schüssel angeordnet sind. Demgemäß sind zur Befestigung der Radschüssel 2 an der Felge 1 vier um jeweils 90° gegeneinander versetzte Halteböckchen 3 vorgesehen, die bei dem bevorzugten Ausführungsbeispiel als Doppelböckchen ausgebildet sind. Die Befestigung der Radschüssel 2 erfolgt demgemäß an jedem Halteböckchen 3 mit Hilfe von zwei in Umfangsrichtung der Felge gegeneinander versetzten Schrauben 10.

Der Felgenboden 6 weist am Sitz der Halteböckchen 3 radial nach innen gerichtete nockenartige Einpressungen 11 auf, die als örtliche Ausdrückungen der umlaufenden Sicke 7 des Felgenbodens ausgeführt sind und die, wie vor allem Fig. 2 zeigt, mit Formschluß in die Halteböckchen 3 zwischen deren Schenkel 12 einfassen, wobei sich die Schenkel 12 im Öffnungsbereich der U-förmigen Halteböckchen seitlich gegen die Flanken 13 der nockenartigen Einpressungen flächig anlegen. Die in der Grundform U-förmigen Halteböckchen 3 mit ihren beiden Schenkeln 12 und dem die Schenkel 12 einstückig verbindenden Profilsteg 14 bestehen aus Blechformteilen. Die freien Enden der Schenkel 12 sind mit nach außen gerichteten, sich beiderseits neben der Sicke 7 und den nockenartigen Einpressungen 11 gegen den Felgenboden legenden Flanschen 15 versehen, an denen die Halteböckchen über in Umfangsrichtung der Felge verlaufende Schweißnähte 16 mit dem Felgenboden 6 fest verbunden sind. Die Schenkel 12 der Halteböckchen 3 weisen fluchtende Bolzenlöcher 17 für den Durchgriff der Schrauben 10 auf. Entsprechend ist die Radschüssel 2 an ihren Schüssellappen 8 jeweils mit zwei Bolzenlöchern 18 für den Durchgriff der Schrauben 10 versehen. Die Sicherung der Schraubenverbindungen erfolgt mittels auf die Schrauben 10 aufgedrehter Muttern 19 mit Unterlegscheiben 20.

Die nockenartigen Einpressungen 11 stellen, wie erwähnt, örtliche Ausformungen bzw. Vertiefungen der umlaufenden Sicke 7 der Radfelge 1 dar.

Wie vor allem die Fig. 2 und 4 zeigen, sind die nockenartigen Einpressungen 11 zu der durch den Scheitel der Sicke 7 durchgehenden Durchmesserebene der Felge 1 symmetrisch mit zur Radachse hin konvex gewölbtem Boden 21 und zum Felgenboden 6 hin divergierenden Flanken 13 ausgeformt, die über Rundungen 22 in den Felgenboden 6 auslaufen. Fig. 5 zeigt außerdem, daß die Felge 1 für jedes Halteböckchen 3 zwei in Umfangsrichtung gegeneinander versetzte nockenartige Einpressungen 11 aufweist, die aus der umlaufenden Sicke 7 ausgeformt sind und deren Abstand in Umfangsrichtung der Felge etwa dem Abstand der Bolzenlöcher 17 am Halteböckchen 3 entspricht. Die Länge der nockenartigen Einpressungen 11 in Felgenumfangsrichtung ist kleiner als uie Länge der Halteböckchen 3 in Felgenumfangsrichtung. Die nockenartigen Einpressungen 11 laufen an ihren Böden 21 vom Bereich der Bolzenlöcher 17 nach beiden Seiten flachkurvenförmig in den Felgenboden 6 aus, wie dies in Fig. 5 bei 23 dargestellt ist. Aus den Fig. 2 und 3 ist außerdem zu erkennen, daß die Breite der nockenartigen Einpressungen 11 etwa gleich der Breite der Sicke 7 ist.

Die Schenkel 12 der Halteböckchen 3 schmiegen sich mit ihren freien Endbereichen der Außenkontur der nockenartigen Erhebungen 11 an, wodurch eine verhältnismäßig großflächige Abstützung der Schenkel 12 an den Flanken 13 der Einpressungen 11 erreicht wird. Die Schraubenkräfte der zur Schüsselbefestigung dienenden Schrauben 10 halten die Schenkel 12 der Halteböckchen 3 in Anlage an den Flanken 13 der nockenartigen Einpressungen 11. Die Anordnung kann so getroffen werden, daß bei der Herstellung der Halteböckchen 3 der Innenabstand ihrer beiden Schenkel 12 so eingestellt wird, daß er im Abstützungsbereich etwas kleiner ist als der Abstand der äußeren Anlageflächen der Flanken 13. Demgemäß wer den die Halteböckchen 3 unter einer gewissen elastischen Ausbiegung ihrer Schenkel 12 von innen her auf die Einpressungen 11 gedrückt, wodurch eine Flächenvorspannung erreicht wird. Anschließend können die Halteböckchen 3 mit Hilfe der Schweißnähte 16 an der Felge 1 festgelegt werden. Die in Umfangsrichtung der Felge 1 verlaufenden Schweißnähte 16 werden aufgrund der Abstützung der Schenkel 12 an den Flanken 13 unter Vorspannung von den axialen Schraubenkräften nicht ungünstig belastet. Aufgrund der Formschlußverbindung der Halteböckchen 3 mit den nockenartigen Einpressungen 11 der Felge 1 werden im übrigen die Schweißnähte 16 von den axialen Radkräften entlastet.

Wie Fig. 2 zeigt, können die U-förmigen Halteböckchen 3, gemessen zwischen ihren Schenkeln 12, eine Breite aufweisen, die erheblich kleiner ist als ihre Höhe. Diese Abmessungsverhältnisse werden bevorzugt dann gewählt, wenn das Spurverstellrad als Vorderrad bei einem Schlepper od.dgl. eingesetzt wird. Bei schmaler Bauweise der Halteböckchen 3 können die nockenartigen Einpressungen 11 mit entsprechend kleinem Breitenmaß ausgeformt werden.

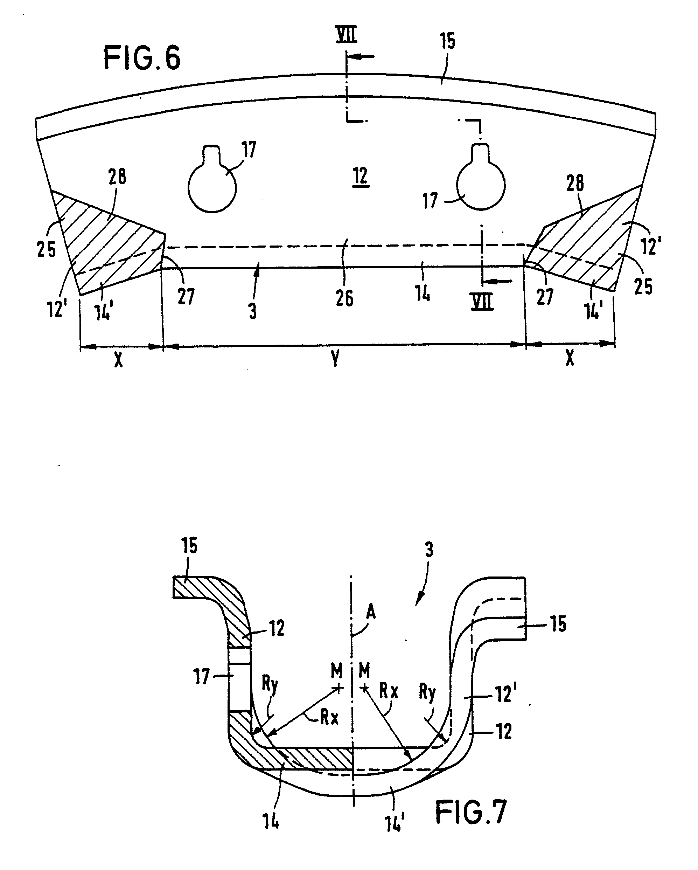

In den Fig. 6 und 7 ist ein einzelnes Halteböckchen 3 gezeigt, das bei dem erfindungsgemäßen Spurverstellrad mit Vorteil zur Verwendung kommen kann. Das Halteböckchen weist hier eine größere Baubreite auf, um seine Formgestaltung deutlicher erkennen zu können. Es versteht sich aber, daß sich die hier gezeigte Formgestaltung des Halteböckchens auch bei anderen Breitenabmessungen, also auch bei den schmalen Halteböckchen gemäß Fig. 2 verwenden läßt. Das Halteböckchen 3 umfaßt in einem Stück die beiden Endbereiche 25, die sich, über den Profilsteg des U-Profils gemessen, über eine Länge X erstrecken, und den Zwischenabschnitt 26 mit der Länge Y. Auf dem Zwischenabschnitt 26 ist der Profilsteg 14 des U-Profils als Flachschenkel ausgebildet.

Die beiden Profilschenkel 12 stehen hier im wesentlichen rechtwinklig zum Profilsteg 14; sie gehen mit dem inneren Krümmungsradius Ry in den Flachsteg über. Der Krümmungsradius Ry ist verhältnismäßig klein; er liegt im allgemeinen bei etwa 4 bis 7 mm. Die Außenflächen der Profilstege 14 des Zwischenabschnittes 26 bilden ebene Anlageflächen für die Radschüssellappen 8.

In den beiden Endbereichen 25 des Halteböckchens 3 wird das U-Profil von dem Profilsteg 14′ und den beiden Profilschenkeln 12′ gebildet. Wie vor allem Fig. 7 zeigt, ist der Profilsteg 14′ des U-Profils in den beiden Endbereichen 25 des Halteböckchens 3 zur Profilaußenseite hin ausgewölbt. Zugleich sind die beiden Profilschenkel 12′ im gekrümmten Übergangsbereich zu dem ausgewölbten Profilsteg 14′ gegenüber der Lage der Profilschenkel 12 im Zwischenabschnitt 26 in den Profilinnenraum eingezogen. Dies bedeutet, daß in den Endbereichen 25 die Profilschenkel 12′ mit inneren Krümmungsradien Rx in den Profilsteg 14′ übergehen, die erheblich größer sind als die Krümmungsradien Ry im Zwischenabschnitt 26 des Halteböckchens. Dabei ist die Anordnung so getroffen, daß der Krümmungsradius Rx vom Übergang 27 (Fig. 6) zu dem Zwischenabschnitt 26 in Richtung auf das benachbarte Ende des Halteböckchens stetig ansteigt, wodurch sich die in Fig. 6 gezeigte Abknickung des Profilstegs in den Endbereichen 25 des Halteböckchens ergibt. Der innere Krümmungsradius Rx ist zweckmäßig erheblich größer, vorzugsweise um mindestens etwa das 4- bis 6fache größer als der Krümmungsradius Ry im Bereich des Zwischenabschnittes 26. Der Krümmungsradius Rx kann an den Enden des Halteböckchens zumindest angenähert gleich der halben Profilinnenbreite sein. Der Krümmungsmittelpunkt M liegt hierbei in oder in Nähe der vertikalen Mittelachse A des U-Profils. Die Länge X der in obiger Weise ausgeformten Endbereiche 25 des Halteböckchens 3 beträgt zweckmäßig etwa 10 bis 20% der Gesamtlänge des Halteböckchens, gemessen über seinen Profilsteg 14, 14′.

Wie Fig. 6 zeigt, befinden sich die Schraubenlöcher 17 für die Schraubenbolzen 10 außerhalb der ausgeformten Endbereiche 25, also im Bereich des Zwischenabschnittes 26 an den Profilschenkeln 12, und zwar in Nähe der Übergangsstellen 27 zu den Endbereichen 25. Die Lochachsen liegen gemäß Fig. 7 etwa in Höhe des Mittelpunktes M der Krümmungsradien Rx.

Mit der vorstehend beschriebenen Formgebung des Halteböckchens 3 wird erreicht, daß sich insbesondere in den kritischen Endbereichen desselben, und zwar vor allem im Bereich der Krümmungsradien Rx bzw. Ry, keine schädlichen Spannungskonzentrationen einstellen können. Die Vergrößerung der Krümmungsradien Ry an den Übergängen zwischen den Profilschenkeln 12′ und dem Profilsteg 14′ führt zu festigkeitsmäßig günstigen Anlageverhältnissen zwischen den Radschüssellappen 8 und den Profilschenkeln der Halteböckchen. Insbesondere wird hiermit erreicht, daß in den kritischen Endbereichen der Halteböckchen keine Anlage zu den Radschüssellappen 8 besteht. In Fig. 6 sind die Flächenfelder bei 28 schraffiert angedeutet, in denen in den beiden Endbereichen 25 des Halteböckchens 3 keine Schüsselanlage zu den Profilschenkeln 12′ vorhanden ist. Die Radschüssellappen 8 stützen sich vielmehr nur an den geradlinigen Profilschenkeln 12 im Zwischenabschnitt 26 großflächig ab, wo sich auch die Schrauben 10 befinden. Die Übergangsbereiche 27 zu den ausgeformten Endbereichen des Halteböckchens 3 sind in Fig. 5 für das Halteböckchen nach Fig. 2 angegeben.

Die Bolzenlöcher 17 sind langloch- bzw. schlüssellochartig ausgeführt, da die Schrauben 10 an ihren Bolzenköpfen 29 der Drehsicherung dienende Nocken 30 aufweisen, die in die Bolzenlöcher einfassen (Fig. 2).

Es versteht sich, daß bei dem erfindungsgemäßen Spurverstellrad bei entsprechender Anpassung der Radschüssel auch mehr als vier Halteböckchen vorgesehen sein können und daß anstelle der Doppelböckchen auch Einzelböckchen verwendbar sind. Durch die rund umlaufende Sicke 7 wird die Felge 1 zusätzlich ausgesteift und außerdem das Einbringen der nockenartigen Einpressungen 11 fertigungsmäßig vereinfacht. Gegebenenfalls kann aber auch auf das Einrollen der umlaufenden Sicke 7 verzichtet werden.

Die Spurweiteneinstellung erfolgt in bekannter Weise dadurch, daß die Radschüsseln 2 in ihrer einen oder anderen Wendelage entweder am linken oder am rechten Profilschenkel 12 der außermittig zur Felge angeschweißten Halteböckchen 3 angeschlossen werden. "

## Ansprüche

1. Spurverstellrad mit einer an Halteböckchen der Felge lösbar und versetzbar angeordneten Radschüssel, wobei die über den Innenumfang der Felge verteilt angeordneten, in der Grundform U-förmigen Halteböckchen an ihren Schenkeln, die mit fluchtenden Bolzenlöchern für der Radschüsselbefestigung dienende axiale Schrauben versehen sind, mittels in Felgenumfangsrichtung verlaufender Schweißnähte am Felgenboden befestigt sind, **dadurch gekennzeichnet,** daß der Felgenboden (6) am Sitz der Halteböckchen (3) nockenartige Einpressungen (11) aufweist, die in die Halteböckchen mit Formschluß einfassen und gegen deren Flanken (13) sich die Halteböckchen mit ihren Schenkeln (12) seitlich abstützen.

2. Spurverstellrad nach Anspruch 1, **dadurch gekennzeichnet,** daß die nockenartigen Einpressungen (11) zur Durchmesserebene der Felge (1) symmetrisch mit zur Radachse konvex gewölbtem Boden (21) und zum Felgenboden (6) divergierenden, über Rundungen (22) in den Felgenboden übergehenden Flanken (13) ausgeführt sind.

3. Spurverstellrad nach Anspruch 1 oder 2, **dadurch gekennzeichnet,** daß die nockenartigen Einpressungen (11) als örtliche Ausdrückungen einer umlaufenden Sicke (7) des Felgenbodens (6) ausgeführt sind.

4. Spurverstellrad nach Anspruch 3, **dadurch gekennzeichnet,** daß die Sicke (7) im Querschnitt etwa flach-V-förmig ausgeformt ist.

5. Spurverstellrad nach Anspruch 3 oder 4, **dadurch gekennzeichnet,** daß die Breite der nockenartigen Einpressungen (11) etwa gleich der Breite der Sicke (7) ist.

6. Spurverstellrad nach einem der Ansprüche 1 bis 5, **dadurch gekennzeichnet,** daß die Schenkel (12) der Halteböckchen nach außen gerichtete, sich gegen den Felgenboden (6) legende Flansche (15) aufweisen, an denen die Halteböckchen beiderseits der nockenartigen Einpressungen (11) mit dem Felgenboden (6) verschweißt sind.

7. Spurverstellrad nach einem der Ansprüche 1 bis 6, **dadurch gekennzeichnet,** daß die Länge der nockenartigen Einpressungen (11), in Felgenumfangsrichtung gesehen, kleiner ist als die Länge der Halteböckchen (3) in Felgenumfangsrichtung, wobei die, vorzugsweise im Bereich der Bolzenlöcher der Halteböckchen befindlichen, nockenartigen Einpressungen (11) von den Bolzenlöchern (17) der Halteböckchen nach beiden Seiten flach-

kurvenförmig in den Felgenboden (6) auslaufen.

8. Spurverstellrad nach einem der Ansprüche 1 bis 7, **dadurch gekennzeichnet,** daß die Halteböckchen (3) als Doppelböckchen mit zwei Bolzenlochpaaren (17) an ihren Schenkeln (12) ausgebildet sind, und daß die Felge (1) am Sitz der Doppelböckchen jeweils zwei nockenartige Einpressungen (11) im Abstand der beiden Bolzenlochpaare aufweist.

9. Spurverstellrad nach einem der Ansprüche 1 bis 8, **dadurch gekennzeichnet,** daß die Halteböckchen (3) im Abstandsmaß ihrer Schenkel (12) eine Breite aufweisen, die kleiner ist als ihre Höhe.

10. Spurverstellrad nach einem der Ansprüche 1 bis 9, **ge kennzeichnet durch** folgende Gestaltungsmerkmale der Halteböckchen:

- der Profilsteg (14') in den beiden Endbereichen (25) des Halteböckchens (3) weist eine zur Profilaußenseite gerichtete Auswölbung mit einem inneren Krümmungsradius (Rx) auf, der größer ist als der Krümmungsradius (Ry) zwischen Profilsteg (14) und Profilschenkeln (12) im Zwischenabschnitt (26) zwischen den beiden Endbereichen (25) des Halteböckchens;

- in den Endbereichen (25) sind die beiden Profilschenkel (12') im gekrümmten Übergangsbereich zu dem gewölbten Profilsteg (14') gegenüber der Lage der Profilschenkel (12) im Zwischenabschnitt (26) in den Profilinnenraum eingezogen;

- der Krümmungsradius (Rx) zwischen dem Profilsteg (14') und den Profilschenkeln (12') steigt vom Übergang (27) zu dem Zwischenabschnitt (26) in Richtung auf das Ende des Halteböckchens (3) hin stetig an;

- die Löcher (17) für die der Verbindung mit der Radschüssel (2) dienenden Schrauben (10) sind außerhalb der ausgeformten Endbereiche (25) an den Profilschenkeln (12) des Zwischenabschnittes (26) angeordnet.

EP 0 405 100 A1

FIG.1

FIG.2

Lm 224

8

FIG.3

FIG.4

FIG.5

Lm 224

FIG.6

FIG.7

Lm 224

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0319694 (LEMMERZ-WERKE)<br>* Spalte 5, Zeile 14 - Spalte 6, Zeile 21; Figuren 1-3 *<br>--- | 1, 3, 5, 6, 7, 8 | B60B23/12 |
| Y | US-A-3117369 (ALBERT)<br>* das ganze Dokument *<br>--- | 1, 3, 5, 6, 7, 8 | |
| A | DE-C-928868 (LEMMERZ)<br>* Seite 2, Zeilen 25 - 73; Figuren 1-3 *<br>--- | 2, 3, 4, 5 | |
| A | DE-U-1843932 (SUDRAD)<br>* Seite 1, Zeilen 22 - 28; Figur 1 *<br>--- | 1 | |
| A | US-A-4643484 (LUTER)<br>* Spalte 3, Zeilen 15 - 22; Figur 6 *<br>----- | 1 | |
| | | | **RECHERCHIERTE SACHGEBIETE (Int. Cl.5)**<br><br>B60B |

Der vorliegende Recherchenbericht wurde für alle Patentansprüche erstellt

| Recherchenort | Abschlußdatum der Recherche | Prüfer |
|---|---|---|
| DEN HAAG | 21 SEPTEMBER 1990 | AYITER I. |